# EUROPÄISCHE PATENTSCHRIFT

(11) **EP 2 806 819 B1**
(45) Veröffentlichungstag und Bekanntmachung des Hinweises auf die Patenterteilung: **25.04.2018**
(21) Anmeldenummer: 13702009.5
(22) Anmeldetag: 24.01.2013
(51) Int. Cl.: A61C 8/00, A61C 13/083

(54) **DENTALIMPLANTAT**
DENTAL IMPLANT
IMPLANT DENTAIRE

(30) Priorität: 25.01.2012 DE 102012201092
(43) Veröffentlichungstag der Anmeldung: 03.12.2014
(73) Patentinhaber: Ivoclar Vivadent AG, 9494 Schaan (LI)
(72) Erfinder: CRAMER VON CLAUSBRUCH, Sascha, 75417 Mühlacker/Lienzingen (DE)
(74) Vertreter: Splanemann, Rainer
(86) Internationale Anmeldenummer: PCT/EP2013/051354
(87) Internationale Veröffentlichungsnummer: WO 2013/110714

(56) Entgegenhaltungen:
- US-A- 5 702 695
- US-A1- 2008 254 413
- US-A1- 2010 297 583

## Beschreibung

Die Erfindung betrifft ein Dentalimplantat, gemäß dem Oberbegriff von Anspruch 1. Bekannte Dentalimplantate weisen in der Regel einen Implantatkörper auf, der bestimmungsgemäß in den Kieferknochen eines Patienten mittels eines Außengewindes in diesen eingeschraubt wird, oder in diesem in anderer Weise befestigt wird, und dort festwächst, wie z.B. US2008/0254413. Typischerweise ist in der Implantatprothetik die Suprakonstruktion des Dentalimplantats, also in der Regel die betreffende Krone, über ein separates Verbindungselement, ein sogenanntes Abutment, an dem Implantatkörper befestigt. Es werden sowohl Titanabutments als auch solche aus Aluminiumoxidkeramik und aus Zirkondioxidkeramik verwendet, wobei eine gute Biokompatibililät erwünscht ist, da das Abutment in der Regel an der Gingiva anliegt.
Abutments werden meist so gefertigt, dass eine sichere Anlage und Verankerung sowohl gegenüber der Krone als auch gegenüber dem Implantatkörper gewährleistet ist. Mit dem Abutment soll die genaue Lage, also die Höhenlage, ggf. die Neigung in mesio-distaler Richtung, die Winkelstellung, in 5 Dimensionen festgelegt werden. Ein derartiges Abutment ist meist als Formkörper mit einer vertikalen Achse ausgebildet, um die herum es sich kreissymmetrisch erstreckt. Es kann eine Schraubverbindung oder eine Klebeverbindung realisiert sein, aber auch ein Aufpressen ist möglich.

Vorgefertige Abutments haben den Nachteil, dass sie sich häufig nicht so gut in die Zahnreihe im Mund des Patienten einpassen lassen, und eine Formänderungwird durch das harte Material (Titan, ZrO₂) erschwert. Hierdurch ist das Anfertigen der Suprakonstruktion problematisch.

Daher werden in letzter Zeit auch individuell gefertigte Abutments verwendet. Allerdings erfordern diese einen hohen Zeit- und Kostenaufwand.

Die Krone oder Suprakonstruktion weist entweder ein metallisches Gerüst, das z.B. mit Keramik verblendet ist, oder sie besteht aus Keramik oder Komposit. Bei Realisierung der Verbindung zwischen der Krone und dem Implantatkörper mittels der genannten Schraubverbindung muß die Schraube mit einem exakt vorgegeben Drehmoment angezogen werden, um zu verhindern, dass Kaukräfte die Verbindung lösen können. Bei Verwendung einer Zement- bzw. Klebstoffverbindung, die zur Verbindung des Abutments und der Suprakonstruktion Verwendung finden kann, kann es zu Periimplantitis, also zum Knochenrückgang im Bereich des Implantatkörpers, kommen. Auch sind die bisher verwendeten Dentalimplantate vergleichsweise teuer und aufwendig.

Aus der WO 99/055249 A1 ist es bekannt geworden, das Abutment gleichsam in den Implantatkörper zu integrieren. Hierzu ist der Implantatkörper zweiteilig, mit einem Metallkern und einer Umhüllung aus Keramik oder Kompositmaterial. Die Krone weist einen Innenkonus auf, der auf die kegelstumpfförmige Retentionsform des Implantatkörpers passen soll. Um eine gute Verbindung zu gewährleisten, weist die Krone einen recht kleinen Konuswinkel auf, so dass die unteren supragingivalen Bereiche der Krone recht dünn ausfallen. Um einen Bruch dort zu vermeiden, sieht die genannte Lösung bevorzugt eine Klebeverbindung der Krone vor, trotz der bekannten Nachteile.
Demgegenüber liegt der Erfindung die Aufgabe zugrunde, ein Dentalimplantat, gemäß dem Oberbegriff von Anspruch 1 zu schaffen, das trotz geringer Kosten eine sichere Lagerung der Suprakonstruktion erlaubt. Erfindungsgemäß sind ein Befestigungsabschnitt und die Suprakonstruktion als einstückiges Bauteil aus gleichem Material ausgebildet.
Bei einem erfindungsgemäßen Dentalimplantat werden somit nicht nacheinander zwei Bauteile, nämlich eine separate Suprakonstruktion und ein separater Befestigungsabschnitt (Abutment) mit dem Implantatkörper verbunden, sondern nur das genannte einstückige Bauteil. Dieses wird über eine Schraubverbindung an dem Implantatkörper befestigt.
Hierfür ist das einstückige Bauteil mit einer Durchtrittsausnehmung versehen, die sich von der Suprakonstruktion durch den Befestigungsabschnitt hindurch erstreckt. Die Befestigungsschraube ist in diesem Verschraubungskanal oder dieser Durchtrittsausnehmung geführt und liegt mit ihrem konischen Schraubenkopf innen an dem Befestigungsabschnitt an, so dass sie durch diesen nicht vollständig hindurchrutschen kann. Zumindest abschnittsweise weist der Verschraubungskanal einen geringeren Durchmesser als der Schraubenkopf auf. Erfindungsgemäß sind sowohl an dem Befestigungsabschnitt der Krone als auch an dem Implantatkörper je Eingriffselemente mit mindestens je einer von einer Kreisform abweichenden Schrägfläche, insbesondere je einem Mehrkant, vorgesehen. Diese stehen lösbar miteinander in Eingriff.
Überraschend lassen sich solche Eingriffselemente auch dann fertigen, wenn die Krone aus einem Rohling gefräst wird, was insbesondere dann gilt, wenn die Eingriffselemente an der Krone nach außen weisen, also beispielsweise als AußenMehrkant ausgebildet sind. Damit läßt sich die Formschluß-Funktion von Abutments, und auch die dort mögliche Justage, vollständig von der Verbindung der Suprakonstruktion mit dem Implantatkörper übernehmen.

Das einstückige Bauteil, welches den Befestigungsabschnitt und die Suprakonstruktion bildet, ist vorzugsweise als Frästeil hergestellt. Die Genauigkeit der im Dentalbereich verwendeten Fräsmaschinen ist ausreichend hoch, um die hierfür erforderliche Präzision zur Verfügung zu stellen. Durch die Fräsbearbeitung kann auch die genannte Durchtrittsausnehmung in das Bauteil eingebracht werden. Anstelle der Herstellung des einstückigen Bauteils als Frästeil ist es auch möglich, dieses durch an sich bekannte Rapid-Prototyping-Verfahren wie 3D-Druck und SLM (Selective Laser Melting) herzustellen.

Da das einstückige Bauteil im Bereich der Suprakonstruktion zumindest abschnittsweise die Außenfläche des Ersatz-Zahns oder Dentalrestaurats bildet, ist es aus einem in etwa der Farbe von Zähnen entsprechenden Material gefertigt. Vorzugsweise bildet die Suprakonstruktion, die durch das einstückige Bauteil gebildet wird, alle Oberflächen des Zahn mit Ausnahme des Zugangs zur Durchtrittsausnehmung. Als Material für das einstückige Bauteil können die im Dentalbereich üblichen Keramikwerkstoffe verwendet werden, z.B. Oxidkeramiken wie Zirkondioxid oder Silikatkeramiken wie Lithiumdisilikat. Die genannten Keramiken bieten Materialeigenschaften im Hinblick insbesondere auf Härte und Bruchfestigkeit, die sowohl dem Bestimmungszweck als Zahnersatz als auch der Tatsache Rechnung tragen, dass das einstückige Bauteil auch durch die Befestigung am Implantatkörper mechanisch belastet wird. Grundsätzlich sind jedoch auch Komposits oder Kunststoffe verwendbar.

In vorteilhafter Ausgestaltung ist der Befestigungsabschnitt an die Krone unten nach der Art eines kegelstumpfförmigen Zapfens einstückig angeformt, wobei Eingriffselemente, die zur Übertragung von Drehmomenten geeignet sind, dort an diesem Befestigungsabschnitt vorgesehen sind, bevorzugt an der Kegelspitze.

Eine momentensichere Abstützung dieser erfolgt über gegenüberliegende Eingriffselemente, die an oder im Implantatkörper ausgebildet sind, und in welche die Eingriffselemente der Krone eindringen.

Der zapfenförmige Befestigungsungsabschnitt der Krone ist so von dem Implantatkörper sicher umgeben und abgestützt, was der Lagersicherheit zugute kommt.

Die Anzahl der möglichen relativen Winkelpostionen zwischen Implantatkörper und Krone läßt sich in weiten Bereichen an die Erfordernisse anpassen. So kann das nach innen weisende Eingriffselement bevorzugt eine feinere Teilung als das nach außen weisende aufweisen. Ein Außen-Sechskant am Zapfen der Krone kann z.B. mit einer 15-Grad-Teilung von Rillen im Implantatkörper kombiniert werden.

Die Durchtrittsausnehmung für die Befestigungsschraube läßt sich nach dem Aufbringen des Befestigungsabschnitts des einstückigen Bauteils in an sich bekannter Weise mit einem Füllmaterial verschließen. Hierfür eignen sich im Dentalbereich übliche Werkstoffe, die im Mund des Patienten aushärten. Derartige Kunststoffe sind als Füllungs-, Reparatur- und Verblendkunststoffe bekannt. Im Falle, dass nach Einsetzen des Dentalimplantats in den Mund eines Patienten Zugang zur Befestigungsschraube erforderlich ist, ist es in der Regel möglich, das verwendete Material wieder zu entfernen.

Die Befestigung des einstückigen Bauteils am Implantatkörper erfolgt vorzugsweise ausschließlich über die genannte Schraubverbindung. Die Befestigungsschraube stellt somit das einzige Befestigungsmittel dar, welches einer Trennung des einstückigen Bauteils vom Implantatkörper entgegenwirkt. Somit kann die Verwendung eines Klebstoffs oder Dentalzements vollständig vermieden werden.

Der einstückige Körper aus Krone und Befestigungsabschnitt, und der Implantatkörper sind vorzugsweise derart aufeinander abgestimmt, dass sie durch Ansetzen aneinander und zunächst unabhängig von der Verschraubung formschlüssig einer rotativen Relativbewegung entgegenwirken. Sie können hierzu beispielsweise korrespondierende Sechskantabschnitte oder anderweitig von der Kreisform abweichende Abschnitte aufweisen, die einen einer solchen Relativbewegung entgegenwirkenden Formschluss verursachen. Diese der Drehsicherung dienenden Abschnitte können zylindrisch oder auch pyramidenabschnittsförmig und korrespondierend zueinander männlich und weiblich geformt sein.
Bei dem Implantatkörper handelt es sich vorzugsweise um einen solchen, der bestimmungsgemäß nicht selbst Abschnitte aufweist, die über das Zahnfleisch des Patienten hinaus in den Mundraum ragen. Stattdessen erstreckt sich der Implantatkörper zum überwiegenden Teil bestimmungsgemäß im Kieferknochen des Patienten und ragt über diesen nur geringfügig bis in das Zahnfleisch des Patienten hinein.

Es ist ein Verfahren zur Herstellung eines Befestigungsabschnitts und einer Suprakonstruktion vorgesehen, bei dem der Befestigungsabschnitt und die Suprakonstruktion als einstückiges Bauteil hergestellt werden. Hierbei ist unter Einstückigkeit zu verstehen, dass der spätere Befestigungsabschnitt und die spätere Suprakonstruktion bereits im Stadium der Urformung, also beispielsweise bei der Herstellung eines Keramikrohlings miteinander einstückig sind.
Bevorzugt wird die Suprakonstruktion mittels Fräsbearbeitung hergestellt, aus einem Rohling aus einer vorzugsweise endgesinterten Keramik, insbesondere einer Oxidkeramik wie Zirkonoxid.

Die Montage des Dentalimplantats erfolgt, indem das genannte einstückige Bauteil mit Befestigungsabschnitt und Suprakonstruktion mittels einer Schraubverbindung mit dem Implantatkörper verbunden wird und anschließend der Teil der Durchtrittsausnehmung oberhalb des Schraubenkopfes mittels eines zahntechnischen Füllmaterials verschlossen wird.
Weitere Einzelheiten, Vorteile und Merkmale ergeben sich aus der nachfolgenden Beschreibung von bevorzugten Ausführungsbeispielen der Erfindung.

Es zeigen:
- Fig. 1: ein erfindungsgemäßes Dentalimplantat in einer Ausführungsform im Schnitt;
- Fig. 2: eine perspektivische Ansicht einer weiteren Ausführungsform eines erfindungsgemäßen Dentalimplantats; und
- Fig. 3: eine perspektivische Ansicht einer dritten Ausführungsform eines erfindungsgemäßen Dentalimplantats.

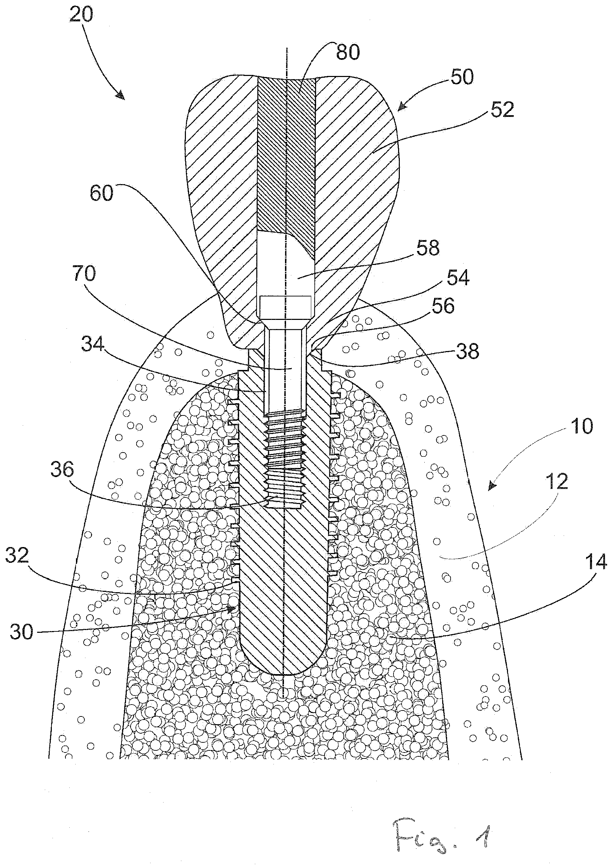

Gemäß Fig. 1 ist ein Dentalimplantat 20 im bereits im Kiefer eines Patienten eingesetzten Zustand dargestellt. In Fig. 1 ist ein Schnitt durch den Kiefer 10 des Patienten dargestellt, wobei durch verschiedene Füllstrukturen der Kieferknochen 14 und das ihn umhüllende Zahnfleisch 12 angedeutet sind.

Das in den Kiefer des Patienten eingesetzte Dentalimplantat 20 verfügt über einen Implantatkörper 30. Dieser Implantatkörper 30 ist ähnlich den aus dem Stand der Technik bekannten Implantatkörpern. Er weist eine in etwa zylindrische Grundform auf und verfügt an seiner Außenseite über eine Gewindestruktur 32, die der Einbringung und dem Verwachsen mit dem Kieferknochen dient.

Bevorzugt ist der Implantatkörper 30 dafür ausgebildet ist, nicht durch das Zahnfleisch 12 des Patienten bis in den Mundraum zu ragen.

Ausgehend von seiner oberen Stirnseite erstreckt sich eine Gewindeausnehmung 34 im Implantatkörper. In dieser ist ein Innengewinde 36 vorgesehen. Am stirnseitigen Eingang des Gewindekanals 34 ist eine konische Vertiefung (weiblich) vorgesehen, die in der Fig. 1 nicht entnehmbarer Weise unrund ausgestaltet ist, beispielsweise indem sie die Form eines drei-, vier-, sechs- oder mehrseitigen Pyramidenabschnitts aufweist, und Eingriffselemente 38 des Implantatkörpers 30 bildet.

Am Implantatkörper 30 ist ein Bauteil 50 befestigt, welches sowohl eine Suprakonstruktion 52 als auch einen Befestigungsabschnitt 54 umfasst. Die Suprakonstruktion 52 bildet den überwiegenden Teil der über das Zahnfleisch 14 hinausragenden Flächen des Zahnersatzes. Der Befestigungsabschnitt 54, der sich einstückig an die Suprakonstruktion 52 anschließt, erstreckt sich subgingival bis zum Implantatkörper 30. Korrespondierend mit dem Implantatkörper 30 weist auch der Befestigungsabschnitt 54 im vorliegenden Ausführungsbeispiel pyramidenabschnittsförmige Eingriffelemente 56 auf, die schräg nach unten und außen weisen. Vorzugsweise sind auch sie übereinstimmend mit der konischen Vertiefung des Implantatkörpers 30 mit einer von der rotationssymmetrischen Form abweichenden und vorzugsweise pyramidenabschnittsförmigen Schrägflächen versehen, so dass das auf den Implantatkörper 30 aufgesetzte Bauteil 50 durch die gegenseitige Anlage formschlüssig drehgesichert ist.

Alternativ zur darstellten Gestaltung kann der Formschluss auch durch eine männliche Gestaltung am Implantatkörper 30 sowie eine weibliche Gestaltung in Form einer Vertiefung am Bauteil 50 realisiert sein.

Die vollständige Befestigung des Bauteils 50 erfolgt mittels einer Schraube 70. Diese ist durch einen Durchtrittsausnehmung 58 des Bauteils 52 hindurch gesteckt, wobei durch ein konischer Sitz 60 am unteren Ende des Durchtrittsausnehmunges 58 einen Anschlag für den dort ebenfalls konischen Schraubenkopf bildet. Die Schraube 70 ist in das Innengewinde 36 eingeschraubt und sorgt für einen festen und aufgrund der Strukturen 38, 56 auch drehgesicherten Halt des Bauteils 52 am Implantatkörper 30.

Der Konuswinkel des Sitzes 60 entspricht hier dem Konuswinkel der konischen Vertiefung und beträgt hier 45 Grad zur Schraubenachse. Da die Suprakonstruktion sich in Ihrem Befestigungsabschnitt 54 zum Implantatkörper 30 hin ebenfalls verjüngt, läßt sich so an dieser Stelle in einfacher Weise eine vergleichsweise große über den verlauf in vertikaler Richtung gleichbleibende Materialstärke erzielen, die beispielsweise etwa dem halben Durchmesser des Implantatkörpers entsprechen kann, oder auch etwas größer oder kleiner als dieser sein kann.

Der Durchtrittsausnehmung 58 ist zur Bildung einer einheitlichen Außenfläche mit einer dentalen Füllmasse 80, insbesondere aus Kunststoff, gefüllt. Sollte es später erforderlich werden, Zugang zur Schraube 70 zu erlangen, kann das Füllmaterial 80 leicht wieder entfernt werden.

Das erfindungsgemäße Dentalimplantat mit dem Implantatkörper 30, der im wesentlichen der Gestaltung bereits bekannter Implantatkörper entspricht, und mit dem einstückigen Bauteil 50, welches den Befestigungsabschnitt 54 und die Suprakonstruktion 52 in sich vereint, stellt eine kostengünstige Ausgestaltung eines Dentalimplantats dar. Es entfällt die Notwendigkeit, Komponenten des Dentalimplantats durch Klebstoff oder Dentalzement miteinander zu verbinden, so dass der Aufwand zur Versorgung des Patienten mit einem zahntechnischen Dentalimplantat reduziert und die Gefahr von postoperativen Komplikationen verringert wird.

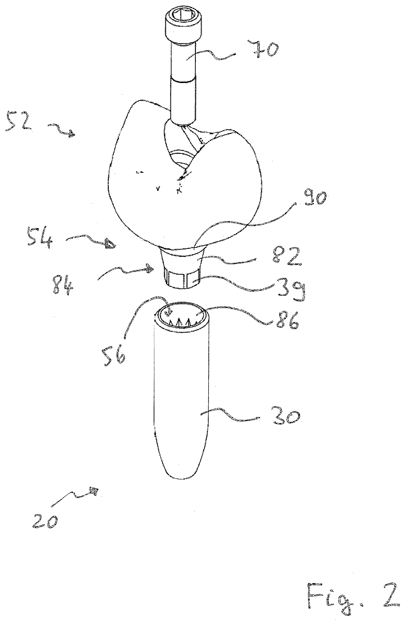

Fig. 2 zeigt in perspektivischer Ansicht ein Dentalimplantat 20 in einer weiteren Ausführungsform. Aus Gründen der Übersichtlichkeit der Darstellung sind die drei Bestandteile des Dentalimplantates 20, nämlich die Befestigungsschraube 70, die Suprakonstruktion 52 und der Implantatkörper 30 je getrennt dargestellt, wobei es sich versteht, dass diese drei Teile in montiertem Zustand miteinander in Eingriff sind.

In dem dargestellten Ausführungsbeispiel sind Eingriffselemente 38 am Befestigungsabschnitt 54 als Sechskant ausgebildet. In an sich bekannter Weise weist ein derartiger Sechskant sechs Schrägflächen 39 auf, die sich im Winkel von je 60° zueinander erstrecken, und zwar parallel zur Achse der Befestigungsschraube 70.

Die erfindungsgemäßen Flächen 39 können also insofern nicht nur als pyramidenstumpfförmige Schrägflächen gemäß Fig. 1, sondern auch als Schrägflächen 39 eines Sechskants gemäß Fig. 2 ausgebildet sein.

Das Eingriffselement 38 geht über in eine Verjüngung 82, die sich zapfenförmig aus der Suprakonstruktion 52 herraus erstreckt. Die Verjüngung 82 weist einen Konuswinkel von etwa 15° auf, bezogen auf die Achse der Befestigungsschraube 70 und bildet eine Anlagefläche 84 zu einer entsprechenden Gegen-Anlagefläche 86 an dem Implantatkörper 30.

In okklusaler Richtung sich an die Verjüngung 82 anschließend ist ein Kegelstumpfanschluss 90 vorgesehen, der sich seinerseits bündig an die Suprakonstruktion 52 im Übrigen anschließt.

In den dargestellten Ausführungsbeispiel ist das Eingriffselement 56 durch einen Innenzwölfkant ausgebildet, der in dem Implantatkörper 30 oberhalb eines Innengewindes gemäß dem Innengewinde 36 aus Fig. 1 ausgebildet ist. Es versteht sich, dass an Stelle dessen wahlweise das Eingriffselement 65 auch als Achtzehnkant oder als Vierundzwanzigkant ausgebildet sein kann, um eine entsprechend feine Winkelausrichtung zu ermöglichen.

Durch die Kaukräfte im Mund des Patienten werden insbesondere Scherkräfte auf die Suprakonstruktion 52 ausgeübt, die von den Anlageflächen 84,86 aufgenommen und in den Implantatkörper 30 abgeleitet werden. Zusätzlich werden in geringem Umfang auch Drehkräfte um die vertikale Achse der Befestigungsschraube 70 durch die Kaubewegung eingebracht, die durch die Eingriffselemente 38 und 56 aufgefangen und abgeleitet werden.

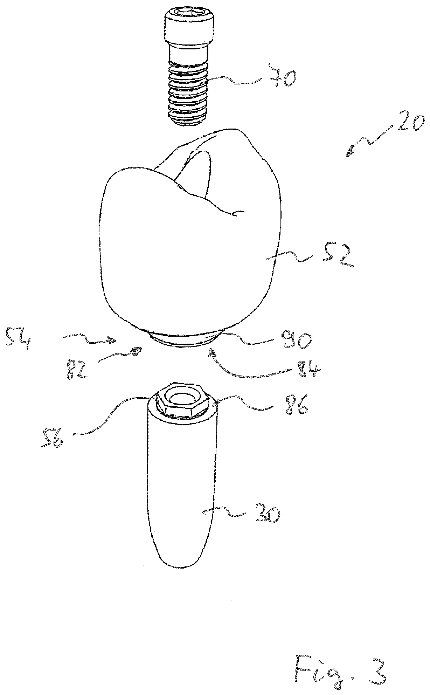

Aus Fig. 3 ist eine modifizierte Ausgestaltung des einfindungsgemäßen Dentalimplantats 20 ersichtlich. Die gleichen Bezugszeichen weisen hier wie auch in den weiteren Figuren auf die gleichen Teile hin und bedürfen keine näheren Erläuterungen.

Eingriffselemente 56 des Implantatkörpers 30 sind in diesem Ausführungsbeispiel als Außen-Sechskant ausgebildet, der am oberen Rand des Implantatkörpers 30 vorgesehen ist und gegenüber dem Außendurchmesser des Implantatkörpers deutlich zurückspringt. Hierzu passend sind Eingriffselemente 38 in einer aus Fig. 3 nicht ersichtlichen Weise als Innenmehrkant an den Befestigungsabschnitt 54 vorgesehen, so dass sich eine entsprechende Winkelfixierung durch den Eingriff der Eingriffselemente 38 und 56 ineinander erzielen lässt.

In diesem Ausführungsbeispiel ist ein Kegelstumpfanschluss 90 der Suprakonstruktion 52 dergestalt vorgesehen, dass die Außenfläche der Suprakonstruktion 52 und die Außenfläche des Implantatkörpers 30 bei Anlage aneinander bündig ineinander übergehen. Die einander zugewandten Anlageflächen 84 und 86 an der Suprakonstruktion 52 und am Implantatkörper 30 sind je exakt zueinander passend gearbeitet, mit einer Maßabweichung, die sehr gering ist und beispielsweise lediglich 20 oder 50 µm betragen kann. Durch Nachbearbeitung nach dem Fräsen, wie beispielsweise durch Polieren, lässt sich auch eine sehr geringe Oberflächenrauhigkeit erzielen, und die Haltekraft der Befestigungsschraube 70 ermöglicht es, einen spaltfreien Anschluss zwischen dem Implantatkörper 30 und der Suprakonstruktion 52 zu erzielen.

## Patentansprüche

1. Dentalimplantat (20), mit einem Implantatkörper (30) zur Einbringung in den Kiefer (14) eines Patienten,
mit einem Befestigungsabschnitt (54), der eine Durchtrittsausnehmung (58) für eine Schraubverbindung (70) aufweist, welche für die lösbare Befestigung des Befestigungsabschnitts (54) mit dem Implantatkörper (30) in diesen einschraubbar ist,
mit einer Suprakonstruktion (52), insbesondere einer Krone, die zumindest den überwiegenden Teil einer Außenfläche mindestens eines Dentalrestaurats bildet, wobei die Suprakonstruktion (52) und der Befestigungsabschnitt (54) als einstückiges Bauteil (50) aus gleichem Material ausgebildet sind, **dadurch gekennzeichnet, dass** der Befestigungsabschnitt (54) und der Implantatkörper (30) je Eingriffselemente (38, 56) mit mindestens je einer von einer Kreisform abweichenden Schrägfläche, insbesondere je einen Mehrkant, aufweisen, welche lösbar miteinander in Eingriff stehen, wobei die Eingriffselemente (38) des Implantatskörpers (30) durch eine unrunde konische Vertiefung, die an einem stirnseitigen Eingang einer sich im Implantatkörper (30) erstreckenden Gewindeausnehmung (34) vorgesehen ist, gebildet sind, wobei die Eingriffselemente (38) mit den Eingriffselementen (56) des Befestigungsabschnitts (54) korrespondieren.

2. Dentalimplantat nach Anspruch 1, **dadurch gekennzeichnet, dass** das einstückige Bauteil (50), welches den Befestigungsabschnitt (54) und die Suprakonstruktion (52) bildet, als Frästeil hergestellt ist, insbesondere aus Keramik, vorzugsweise einer Oxidkeramik, besteht.

3. Dentalimplantat nach einem der vorstehenden Ansprüche, **dadurch gekennzeichnet, dass** die Durchtrittsausnehmung (58) im einstückigen Bauteil (50) einen konischen Sitz (60) aufweist, und dass sie mit einem zahntechnischen Füllmaterial (80) endseitig verschlossen ist.

4. Dentalimplantat nach einem der vorstehenden Ansprüche, **dadurch gekennzeichnet, dass** die Befestigung des einstückigen Bauteils (50) am Implantatkörper (30) ausschließlich über die Schraubverbindung (70) erfolgt.

5. Dentalimplantat nach einem der vorhergehenden Ansprüche, **dadurch gekennzeichnet, dass** Eingriffselemente (38) am Befestigungsabschnitt (45) der Suprakonstruktion (52) an Schrägflächen gebildet sind, die, bezogen auf die Achse der Schraubverbindung (70), nach außen weisen.

6. Dentalimplantat nach einem der Ansprüche 1 bis 4, **dadurch gekennzeichnet, dass** Eingriffselemente (38) am Befestigungsabschnitt (45) der Suprakonstruktion (52) an Schrägflächen gebildet sind, die bezogen auf die Achse der Schraubverbindung (70), nach Innen weisen.

7. Dentalimplantat nach einem der vorhergehenden Ansprüche, **dadurch gekennzeichnet, dass** die Eingriffselemente (38) an den Befestigungsabschnitt (45) durch einen Mehrkant, wie einen Vierkant oder einen Sechskant gebildet sind und dass die Eingriffselemente (65) des Implantatkörpers (30) durch eine Gegenform gebildet sind, die ein ganzzahliges Vielfaches der Schrägflächen der Eingriffselemente (38) aufweist.

8. Dentalimplantat nach einem der vorgehenden Ansprüche, **dadurch gekennzeichnet, dass** die Eingriffselemente (38) am unteren, auf den Implantatkörper (30) zu weisenden Ende des Befestigungsabschnitts (45) ausgeformt sind und bei Anlage der Suprakonstruktion (52) auf den Implantatkörper (30) vollständig mit den Eingriffselementen (65) des Implantatkörpers (30) in Eingriff sind.

9. Dentalimplantat nach einem der vorgehenden Ansprüche, **dadurch gekennzeichnet, dass** die Suprakonstruktion (52) an ihrem auf den Implantatkörper (30) zu weisenden Ende eine konische Verjüngung (82) aufweist, an welcher sie sich auf den Durchmesser des Implantatkörpers (30) verjüngt, und dass sie zum Implantatkörper (30) hin einen bündigen Übergang bildet.

10. Dentalimplantat nach einem der vorgehenden Ansprüche, **dadurch gekennzeichnet, dass** Anlageflächen (84) an dem Befestigungsabschnitt (54) und Anlageflächen (86) an dem Implantatkörper (30) je durch spanabhebende Bearbeitung hergestellt sind und exakt die gleichen zueinander passenden Formen aufweisen.

11. Dentalimplantat nach Anspruch 10, **dadurch gekennzeichnet, dass** die Anlageflächen (84,86) mit einer Massabweichung und Oberflächenrauhigkeit von weniger als 50 µm hergestellt sind.

12. Dentalimplantat nach einem der vorhergehenden Ansprüche, **dadurch gekennzeichnet, dass** die Verjüngung (82) an dem Befestigungsabschnitt (54) in okklusaler Richtung einen größeren Konuswinkel und in gingivaler Richtung einen kleineren Konuswinkel aufweist.

13. Dentalimplantat nach einem der vorhergehenden Anprüche, **dadurch gekennzeichnet, dass** sowohl die Suprakonstruktion (52) als auch der Implantatkörper (30) je einstückig ausgebildet sind, hinsichtlich der Suprakonstruktion (52) gegebenenfalls abgesehen von einer Verfüllmasse (80).

14. Dentalimplantat nach einem der vorhergehenden Ansprüche, **dadurch gekennzeichnet, dass** der Konuswinkel (60) des Kopfes der Befestigungsschraube (70) im Wesentlichen einem Verjüngungswinkel einer Verjüngung (82) außen an dem Befestigungsabschnitt (54) entspricht.

15. Dentalimplantat nach einem der vorhergehenden Ansprüche, **dadurch gekennzeichnet, dass** das einstückige Bauteil (50) aus Silikatkeramik, bevorzugt aus Lithiumdisilikat, hergestellt ist.

16. Dentalimplantat nach Anspruch 1, **dadurch gekennzeichnet, dass** das einstückige Bauteil einen Kunststoff oder ein Komposit aufweist oder aus diesen hergestellt ist.

## Claims

1. A dental implant (20) having an implant body (30) for being inserted into the mandible (14) of a patient, having an attachment portion (54), which comprises a through-recess (58) for a screw connection (70), the screw connection (70) being screwable thereinto for releasably attaching the attachment portion (54) to the Implant body (30), having a supra construction (52), especially a crown, which at least forms the predominant part of an outer surface of at least a dental restorate, wherein the supra construction (52) and the attachment portion (54) are formed as an integral component (50) of the same material, **characterized in that** the attachment portion (54) and the implant body (30) each comprises engagement members (38,56) each having at least inclined surfaces different from a circular shape, especially each having a polygon, which are releasably engaged to each other, wherein the engagement members (38) of the implant body (30) are formed by a non-circular conical recess, which Is provided at a front-side entrance of a threaded recess (34) extending in the implant body (30), wherein the engagement members (38) correspond to the engagement members (56) of the attachment portion (54).

2. The dental implant according to Claim 1, **characterized in that** the Integral component (50), which forms the attachment portion (54), and the supra construction (52) are made as a milled part, especially of ceramic material, preferably an oxide ceramic.

3. The dental implant according to one of the preceding Claims, **characterized in that** the through-recess (58) has a conical seat (60) in the integral component (50), and **in that** it is sealed with a dental filler material (80) at the end-face.

4. The dental implant according to one of the preceding Claims, **characterized in that** attachment of the Integral component (50) to the implant body (30) is exclusively done via the screw connection (70).

5. The dental implant according to one of the preceding Claims, **characterized in that** engagement members (38) at the attachment portion (45) of the supra construction (52) are formed at the inclined surfaces facing outwards In relation to the axis of the screw connection (70).

6. The dental implant according to the Claims 1 to 4, **characterized In that** engagement members (38) at the attachment portion (45) of the supra construction (52) are formed on inclined surfaces facing inwards in relation to the axis of the screw connection (70).

7. The dental implant according to one of the preceding Claims, **characterized in that** the engagement members (38) at the attachment portion (45) are formed by a polygon, such as a square or a hexagon and that the engagement members (65) of the implant body (30) are formed of a counter-shape comprising an Integral multiple of the inclined surfaces of the engagement members (38).

8. The dental implant according to one of the preceding Claims, **characterized in that** the engagement members (38) are formed at the bottom end of the attachment portion (45), the bottom end facing the implant body (30), and when installing the supra construction (52) on the implant body (30) are completely engaged with the engagement members (65) of the implant body (30).

9. The dental implant according to one of the preceding Claims, **characterized in that** the supra construction (52), at Its end facing the implant body (30), has a conical tapering (82), at which it tapers to the diameter of the implant body (30), and that it forms a flush transition towards the implant body (30).

10. The dental Implant according to one of the preceding Claims, **characterized in that** abutment surfaces (84) are produced at the attachment portion (54) and abutment surfaces (86) at the implant body (30) are each produced by machining and having exactly the same shapes matching each other.

11. The dental implant according to Claim 10, **characterized in that** the abutment surfaces (84, 86) are produced, having dimensional deviation and surface roughness of less than 50 gm.

12. The dental implant according to one of the preceding Claims, **characterized in that** the tapering (82) at the attachment portion (54), has a larger cone angle in the occlusal direction, and has a smaller cone angle in the gingival direction.

13. The dental implant according to one of the preceding Claims, **characterized in that** both the supra construction (52) and the implant body (30) are each integrally formed, in relation to the supra construction (52), eventually except for a filler mass (80).

14. The dental implant according to one of the preceding Claims, **characterized in that** the cone angle (60) of the head of the fastening screw (70) essentially corresponds to a taper angle of a tapering (82) exterior of the attachment portion (54).

15. The dental implant according to one of the preceding Claims, **characterized in that** the integral component (50) is produced of silicate ceramic, preferably of lithium disilicate.

16. The dental implant according to Claim 1, **characterized in that** the integral component comprises a plastic material or a composite or is produced thereof.

## Revendications

1. Implant dentaire (20), avec un corps d'implant (30) pour être introduit dans la mâchoire (14) d'un patient, avec une section de fixation (54), qui présente un évidemment de passage (58) pour un raccord vissé (70), qui peut être vissé dans le corps de l'implant (30) pour la fixation amovible de celui-ci avec la section de fixation (54), avec une superstructure (52), en particulier une couronne, qui forme au moins la partie majeure d'une surface extérieure d'au moins une pièce de restauration dentaire, où la superstructure (52) et la section de fixation (54) sont formées comme composant unique (50) du même matériau, **caractérisé en ce que** la section de fixation (54) et le corps de l'implant (30) présentent de part et d'autre des éléments d'accrochage (38, 56) avec au moins une surface inclinée de forme non-circulaire, en particulier un polygone, qui sont en prise l'un avec l'autre de manière amovible, où les éléments d'accrochage (38) du corps d'implant (30) sont formés par une cavité non-circulaire conique qui est fournie sur une entrée du côte frontal d'un trou fileté (34) s'étendant dans le corps de l'implant, où les éléments d'accrochage (38) correspondent aux éléments d'accrochage (56) de la section de fixation (54).

2. Implant dentaire selon la revendication 1, **caractérisé en ce que** le composant unique (50) qui forme la section de fixation (54) et la superstructure (52) est fabriqué comme pièce fraisée, en particulier en céramique, de préférence en céramique d'oxyde.

3. Implant dentaire selon l'une des revendications précédentes, **caractérisé en ce que** l'évidemment de passage (58) dans le composant unique (50) présente un siège conique (60), et qu'il est fermé à son extrémité par un matériau d'obturation dentaire (80).

4. Implant dentaire selon l'une des revendications précédentes, **caractérisé en ce que** la fixation du composant unique (50) au corps d'implant (30) se produit exclusivement par l'intermédiaire du raccord vissé (70).

5. Implant dentaire selon l'une des revendications précédentes, **caractérisé en ce que** des éléments d'accrochage (38) sur la section de fixation (45) de la superstructure (52) sont formés sur des surfaces inclinées, qui sont tournées vers l'extérieur par rapport à l'axe du raccord vissé (70).

6. Implant dentaire selon l'une des revendications précédentes, **caractérisé en ce que** des éléments d'accrochage (38) sur la section de fixation (45) de la superstructure (52) sont formés sur des surfaces Inclinées, qui sont tournées vers l'intérieur par rapport à l'axe du raccord vissé (70).

7. Implant dentaire selon l'une des revendications précédentes, **caractérisé en ce que** les éléments d'accrochage (38)) sur la section de fixation (45) sont formés par un polygone comme un carré ou un hexagone et que les éléments d'accrochage (65) du corps d'implant (30) sont formés par une contre-forme qui est un multiple entier des surfaces Inclinées des éléments d'accrochage (38).

8. Implant dentaire selon l'une des revendications précédentes, **caractérisé en ce que** les éléments d'accrochage (38) sont formés sur la partie inférieure de la section de fixation (45) tournée vers le corps d'implant (30) et lorsque la superstructure (52) est posée sur le corps d'implant (30) sont complètement en engagement avec les éléments d'accrochage de (65) du corps d'implant (30).

9. Implant dentaire selon l'une des revendications précédentes, **caractérisé en ce que** la superstructure (52) présente une réduction conique (82) à son extrémité tourné vers le corps d'implant (30), sur lequel elle se réduit au diamètre du corps d'implant (30) et qu'il forme une transition en affleurement avec le corps d'implant (30).

10. Implants dentaire selon l'une des revendications précédentes, **caractérisé en ce que** des surfaces de contact (84) sur la fixation section (54) et des surfaces de contact (86) sur le corps d'implant (30) sont fabriquées respectivement par usinage et présentent exactement les mêmes formes correspondantes.

11. Implant dentaire selon la revendication 10, **caractérisé en ce que** les surfaces de contact (84,86) sont fabriquées avec un écart de mesure et rugosité de surface de moins de 50µm.

12. Implant dentaire selon l'une des revendications précédentes, **caractérisé en ce que** la réduction(82) sur la section de fixation (54) présente un angle conique plus grand dans le sens occlusal et un angle conique plus petit dans le sens gingival.

13. implant dentaire selon l'une des revendications précédentes **caractérisé en ce que** la superstructure (52) ainsi que le corps de l'implant (30) sont formés en une seule pièce, sauf en ce qui concerne la superstructure (52) éventuellement, une masse de remplissage (80).

14. Implant dentaire selon l'une des revendications précédentes, **caractérisé en ce que** celui de l'angle de cône (60) de la tête de la vis de fixation (70) correspond essentiellement à un angle de diminution d'une réduction (82) à l'extérieur sur la section de fixation (54).

15. Implant dentaire selon l'une des revendications précédentes, **caractérisé en ce que** le composant unique (50) est fabriqué en céramique d'argent, de préférence en disilicate de lithium.

16. Implant dentaire selon la revendication 1, **caractérisé en ce que** le composant unique présente un plastique ou un composite ou est fabriqué à partir de ceux-ci.
